# EUROPEAN PATENT SPECIFICATION

(11) **EP 3 160 736 B1**
(45) Date of publication and mention of the grant of the patent: **07.08.2024**
(21) Application number: 15738289.6
(22) Date of filing: 26.06.2015
(51) Int. Cl.: B32B 15/085, B32B 15/12, B32B 23/06, B32B 27/08, B32B 27/10, B32B 27/18, B32B 27/30, B32B 27/32, B32B 27/34, B32B 3/00, B23B 3/26

(54) **SHEET-LIKE COMPOSITE WITH AN M-POLYOLEFIN LAYER WITH A REDUCED ANTIOXIDANT PROPORTION, IN PARTICULAR FOR FOOD PACKAGING**
PLATTENFÖRMIGER VERBUNDSTOFF MIT EINER M-POLYOLEFIN-SCHICHT MIT EINEM VERMINDERTEN ANTIOXIDATIONSMITTELGEHALT, INSBESONDERE ZUR LEBENSMITTELVERPACKUNG
COMPOSITE STRATIFORME À COUCHE DE POLYOLÉFINE M À PROPORTION RÉDUITE EN ANTIOXYDANT, DESTINÉ EN PARTICULIER À UN EMBALLAGE ALIMENTAIRE

(30) Priority: 30.06.2014 DE 102014009466
(43) Date of publication of application: 03.05.2017
(73) Proprietor: SIG Services AG, 8212 Neuhausen am Rheinfall (CH)
(72) Inventor: BISCHOFF, Jörg, 52441 Linnich (DE); DUISKEN, Mike, 52441 Linnich (DE)
(74) Representative: Herzog IP Patentanwalts GmbH
(86) International application number: PCT/EP2015/064507
(87) International publication number: WO 2016/001081

(56) References cited:
- EP-A1- 1 232 856
- WO-A2-2012/114121
- JP-A- 2002 337 293
- US-A1- 2008 090 042
- US-A1- 2013 167 484

## Description

The present invention is set out in the appended set of claims.

For a long time foodstuff, whether foodstuff for human consumption or also animal feed products, have been preserved by being stored either in a can or in a glass jar closed with a lid. The shelf life can, for example, be increased by disinfecting as far as possible in each case the foodstuff and the container, here the glass jar or can, separately and then filling the container with the foodstuff and closing it. However, these measures, which in themselves have been proven for a long time, for increasing the shelf life of foodstuff have a number of disadvantages, for example further sterilisation. Because of their essentially cylindrical shape, cans and glass jars have the disadvantage that very dense and space-saving storage is not possible. Furthermore, cans and glass jars have a considerable intrinsic dead-weight, which leads to an increased consumption of energy during transportation. A quite high consumption of energy is moreover necessary for the production of glass, tinplate or aluminium, even if the raw materials used for this originate from recycling. In the case of glass jars, an increased outlay on transportation is an added complication. The glass jars are usually prefabricated in a glassworks and must then be transported to the foodstuff filling plant utilizing considerable transportation volumes. Glass jars and cans moreover can be opened only with a considerable application of force or with the aid of tools, and therefore rather inconveniently. In the case of cans, there is also a high risk of injury from sharp edges which arise during opening. In the case of glass jars, glass splinters are forever entering into the foodstuff during filling or opening of filled glass jars, which in the worst case can lead to internal injuries on consumption of the foodstuff. In addition, both cans and glass jars are covered with labels to indicate and advertise the contents of the food. Information and advertisements cannot be imprinted directly on glass jars and cans. In addition to the actual printing, therefore, a substrate for it, a paper or an appropriate film, as well as a fixing material, an adhesive or sealing material, are necessary.

Other packaging systems for storing foodstuff for a long period of time as far as possible without impairment are known from the prior art. These are containers produced from sheet-like composites - often also called laminate. Such sheet-like composites are often built up from a layer of thermoplastic plastic, a carrier layer usually made of cardboard or paper, an adhesion promoter layer, an aluminium layer and a further layer of plastic, as disclosed, inter alia, in WO 90/09926 A2.

In the prior art, further packaging laminates are described in US 2013/167484 A1, JP 2002 337293 A and EP 1 232 856 A1. US 2008/0090042 A1 discloses a multilayer sheet for pouches and bag-like containers. WO 2012/114121 A2 provides a method of forming a colour on a substrate.

These laminate containers already have many advantages over the conventional glass jars and cans. Nevertheless, possibilities for improvement also exist for these packaging systems.

Laminate containers are often characterised in that they consist of a laminate, which contains a polyolefin layer as the innermost layer in the container to be made out of the laminate. This polyolefin layer of prior art contains at least one antioxidant, mostly a mixture of two or more antioxidants. Furthermore, one side of the laminate, which later forms an outer surface of the container made from the laminate, is imprinted for information and advertising purposes with a colour layer, also called decoration. After the laminate has been produced, before it is imprinted with the colour layer it is usually stored as a laminate roll. On the laminate roll, the inner polyolefin layer, which contains antioxidants, comes into contact with the opposite outer layer. A laminate of prior art, as described above, has at least the disadvantage that a colour layer imprinted on the outer layer has reduced adhesion. In particular when a container is produced from the laminate, parts of the colour layer can be increasingly removed by folding or sealing tools. On the one hand, this causes damage to the decoration of the later container; on the other hand, it dirties the tools, which can then transfer the dirt to other laminates and hence damage their decoration. If a decoration is damaged, information is lost or the laminate becomes less attractive, which considerably defeats the advertising purpose of the colour layer. In addition, dirty sealing tools can lead to worse sealing results. Furthermore, the dirt from the folding or sealing tools can get inside the container, when it is being produced, and hence get into food when it is being filled. This is particularly critical, because, for one thing, food cannot be allowed to be contaminated and, for another, the food in the laminate containers should have a particularly long shelf life. In the prior art, the damage to the colour layer is combated by applying an additional polymer layer to the colour layer. This presupposes an additional step in the manufacture of the laminate and makes the production more time-consuming and expensive. Any small rise in costs in the packaging industry is particularly disadvantageous. The additional polymer layer makes the laminate and the container made from it heavier. Greater weight increases transport costs and reduces transport capacities. Some of the advantages over glass jars and cans are therefore lost.

Generally, the object of the present invention is to, at least partially, eliminate the disadvantages emerging from prior art. A further object of the invention is to provide a food container made from a folded sheet-like composite, wherein the outside of the container is imprinted with a colour layer, which has one selected from the group consisting of greater adhesive strength of the container, greater resistance to abrasion, greater resistance to abrasion under increased temperature or increased humidity of the surrounding, or both, greater resistance to mechanical influences, and greater resistance to mechanical influences under increased temperature or increased humidity of the surrounding, or both, or a combination of at least two thereof. A further object of the invention is to provide a sheet-like composite for the production of food containers, which can be stored rolled up, wherein the suitability of the sheet-like composite for being imprinted with a decoration is improved. A further object of the invention is to provide a food container or a sheet-like composite, or both, which has one or at least two of the aforementioned advantages, without the colour layer being overlaid on the outside by a protective layer. A further object of the invention is to provide a container during the production of which a folding tool or a sealing tool, or both, get less dirty. A further object of the invention is to provide a process for the production of a closed folded container, wherein, during the process, a folding tool or a sealing tool, or both, get less dirty.

A contribution towards achieving at least partially at least one of the above objects is made by the independent claims. The dependent claims represent preferred embodiments, which contribute towards achieving at least partially at least one of the objects. The scope of the invention is defined by the claims.

A contribution towards achieving at least one of the objects according to the invention is made by a sheet-like composite 1, comprising, as layer sequence:
a) a first polyolefin layer, comprising
   i) an m-polyolefin in a proportion in a range of from 10 to 100 wt.-%, preferably from 20 to 100 wt.-%, more preferably from 30 to 100 wt.-%, more preferably from 40 to 100 wt.-%, more preferably from 50 to 100 wt.-%, more preferably from 60 to 100 wt.-%, more preferably from 70 to 100 wt.%, more preferably from 80 to 100 wt.-%, most preferably from 90 to 100 wt.-%, and
   ii) a first antioxidant in a proportion in a range of from 0 to less than 800 wt.-ppm, preferably from 0 to less than 400 wt.-ppm, more preferably from 0 to less than 200 wt.-ppm, more preferably from 0 to less than 100 wt.-ppm, most preferably from 0 to less than 50 wt.-ppm,
   each range relating to the total weight of the first polyolefin layer;
b) a barrier layer; and
c) a carrier layer.

In a preferred embodiment of the sheet-like composite 1 the layer sequence comprises a further polyolefin layer,
wherein the further polyolefin layer comprises
a) a polyolefin in a proportion in a range of from 10 to 100 wt.-%, preferably from 20 to 100 wt.-%, more preferably from 30 to 100 wt.-%, more preferably from 40 to 100 wt.-%, more preferably from 50 to 100 wt.-%, more preferably from 60 to 100 wt.-%, more preferably from 70 to 100 wt.-%, more preferably from 80 to 100 wt.-%, most preferably from 90 to 100 wt.-%, and
b) a second antioxidant in a proportion in a range of from 0 to less than 800 wt.-ppm, preferably from 0 to less than 400 wt.-ppm, more preferably from 0 to less than 200 wt.-ppm, more preferably from 0 to less than 100 wt.-ppm, most preferably from 0 to less than 50 wt.-ppm,
each range relating to the total weight of the further polyolefin layer. The further polyolefin layer can be positioned at any position in the layer sequence.

In a preferred embodiment of the sheet-like composite 1 the first polyolefin layer or the further polyolefin layer or both contain no antioxidant in a proportion of 800 wt.-ppm or more, preferably of 400 wt.-ppm or more, more preferably of 200 wt.-ppm or more, more preferably of 100 wt.-ppm or more, most preferably of 50 wt.-ppm or more, each proportion relating to the total weight of the first polyolefin layer or the further polyolefin layer or to the total weight of both.

In a preferred embodiment of the sheet-like composite 1 no polymer layer of the sheet-like composite contains an antioxidant in a proportion of 800 wt.-ppm or more, preferably of 400 wt.-ppm or more, more preferably of 200 wt.-ppm or more, more preferably of 100 wt.-ppm or more, most preferably of 50 wt.-ppm or more, each proportion relating to the weight of the polymer layer.

In a preferred embodiment of the sheet-like composite 1 the first polyolefin layer is superimposed on the barrier layer on a side facing away from the carrier layer.

In a preferred embodiment of the sheet-like composite 1 the further polyolefin layer is superimposed on the carrier layer on a side facing away from the barrier layer. The further polyolefin layer preferably abuts the side of the carrier layer.

In a preferred embodiment of the sheet-like composite 1 the m-polyolefin is characterised by at least one first melting temperature and a second melting temperature.

In a preferred embodiment of the sheet-like composite 1 the m-polyolefin is an m-polyethylene or an m-polypropylene or both.

In a preferred embodiment of the sheet-like composite 1 the polyolefin is a polyethylene or a polypropylene or both.

In a preferred embodiment of the sheet-like composite 1
a) the first melting temperature lies in a range of from 84 to 108°C, preferably from 89 to 103°C, more preferably from 94 to 98°C, and
b) the further melting temperature lies in a range of from 100 to 124°C, preferably from 105 to 119°C, more preferably from 110 to 114°C.

In a preferred embodiment of the sheet-like composite 1 the layer sequence further comprises a colour layer, wherein the colour layer is superimposed on the carrier layer on a side facing away from the barrier layer, wherein the colour layer comprises a colourant.

In a preferred embodiment of the sheet-like composite 1 the m-polyethylene is selected from the group comprising an m-LDPE, an m-LLDPE, and an m-HDPE, or a combination of at least two thereof.

In a preferred embodiment of the sheet-like composite 1 the m-polyethylene in addition to ethylene is based on C3- to C10-α-olefin as monomer. A preferred m-polyethylene is an m-LLDPE. Preferably, the m-polyethylene is based to 1 to 25 mol-% on the α-olefin, in relation to the m-polyethylene.

In a preferred embodiment of the sheet-like composite 1 the first antioxidant or the second antioxidant or both is an amine or a phenol derivative or both.

In a preferred embodiment of the sheet-like composite 1 the barrier layer comprises, preferably consists of, one selected from the group consisting of a plastic, a metal, and a metal oxide, or a combination of at least two thereof. A preferred metal is aluminium.

In a preferred embodiment of the sheet-like composite 1 the carrier layer comprises, preferably consists of, one selected from the group consisting of cardboard, paperboard and paper, or a combination of at least two thereof.

In a preferred embodiment of the sheet-like composite 1 the carrier layer has at least one hole, wherein the hole is covered at least by the barrier layer and at least by the first polyolefin layer as hole covering layers. The hole is preferably further covered by the further polyolefin layer.

In a preferred embodiment of the sheet-like composite 1 the sheet-like composite is rolled up into a roll with at least 2, preferably at least 3, more preferably at least 4, more preferably at least 5, more preferably at least 10, most preferably at least 15, layers of the sheet-like composite. The sheet-like composite is preferably formed in one piece. The sheet-like composite is preferably rolled up in the cross section of the roll, preferably in the shape of a spiral.

A contribution to the fulfilment of at least one of the objects according to the invention is made by a container precursor 1, comprising the sheet-like composite 1, wherein the sheet-like composite comprises at least one fold with at least two adjacent fold surfaces, wherein, in each case, at least one part region of the at least two fold surfaces is joined to the other part region by a seal. A preferable container precursor is in the form of a sleeve. In a preferred container precursor the colour layer faces outwards.

A contribution to the fulfilment of at least one of the objects according to the invention is made by a closed container 1, enclosing an interior, wherein the container comprises the sheet-like composite 1 in a folded state. The interior preferably contains a foodstuff. In a preferred container, the sheet-like composite comprises at least 2, preferably at least 3, more preferably at least 4, most preferably at least 10, fold edges.

A contribution to the fulfilment of at least one of the objects according to the invention is made by a process 1 for the production of a sheet-like composite, comprising the following steps:
a) Provision of a composite precursor comprising, as layer sequence, a barrier layer and a carrier layer; and
b) Superimposing a first polyolefin layer on the barrier layer,
   wherein the first polyolefin layer comprises
   i) an m-polyolefin in a proportion in a range of from 10 to 100 wt.-% , preferably from 20 to 100 wt.-%, more preferably from 30 to 100 wt.-%, more preferably from 40 to 100 wt.-%, more preferably from 50 to 100 wt.-%, more preferably from 60 to 100 wt.-%, more preferably from 70 to 100 wt.-%, more preferably from 80 to 100 wt.-%, most preferably from 90 to 100 wt.-%, and
   ii) a first antioxidant in a first antioxidant proportion in a range of from 0 to less than 800 wt.-ppm, preferably from 0 to less than 400 wt.-ppm, more preferably from 0 to less than 200 wt.-ppm, more preferably from 0 to less than 100 wt.-ppm, most preferably from 0 to less than 50 wt.-ppm,
   each range relating to the total weight of the first polyolefin layer. A preferred first polyolefin layer is formed or arranged or both in accordance with an embodiment of the sheet-like composite 1.

In a preferred embodiment of the process 1 the first polyolefin layer contains no oxidant in a proportion of 800 wt.-ppm or more, preferably of 400 wt.-ppm or more, more preferably of 200 wt.-ppm or more, more preferably of 100 wt.-ppm or more, most preferably of 50 wt.-ppm or more, each proportion relating to the weight of the first polyolefin layer.

In a preferred embodiment of the process 1, in a further step, a further polyolefin layer is superimposed on the carrier layer, wherein the further polyolefin layer comprises
a) a polyolefin in a proportion in a range of from 10 to 100 wt.-% , preferably from 20 to 100 wt.-%, more preferably from 30 to 100 wt.-%, more preferably from 40 to 100 wt.-%, more preferably from 50 to 100 wt.-%, more preferably from 60 to 100 wt.-%, more preferably from 70 to 100 wt.-%, more preferably from 80 to 100 wt.-%, most preferably from 90 to 100 wt.-%,
b) a second antioxidant in a proportion in a range of from 0 to less than 800 wt.-ppm, preferably from 0 to less than 400 wt.-ppm, more preferably from 0 to less than 200 wt.-ppm, more preferably from 0 to less than 100 wt.-ppm, most preferably from 0 to less than 50 wt.-ppm,
each range relating to the total weight of the further polyolefin layer. A preferred further polyolefin layer is formed or arranged or both in accordance with an embodiment of the sheet-like composite 1.

In a preferred embodiment of the process 1 the m-polyolefin is characterised by at least one first melting temperature and a further melting temperature.

In a preferred embodiment of the process 1, in a further step, a colour layer is superimposed on the carrier layer on a side facing away from the barrier layer, wherein the colour layer comprises a colourant.

In a preferred embodiment of the process 1, in step (b), the superimposition comprises an extrusion.

A contribution to the fulfilment of at least one of the objects according to the invention is made by an embodiment of a sheet-like composite 2, obtainable through the process 1.

A contribution to the fulfilment of at least one of the objects according to the invention is made by a process 2 for the production of a container precursor, comprising the following steps:
a) Provision of the sheet-like composite 1, or of the sheet-like composite 2;
b) Folding of the sheet-like composite to form a fold with least two adjacent fold surfaces; and
c) Joining in each case of at least one part region of the at least two fold surfaces with the relevant other part region by sealing.

In a preferred embodiment of the process 2, during the folding, at least one part of the sheet-like composite has a temperature in a range of from 10 to 50°C, preferably from 15 to 45°C, more preferably from 20 to 40°C. A preferred folding is a cold folding or a hot folding or both.

In a preferred embodiment of the process 2 sealing takes place through one selected from the group consisting of irradiation, contact with a solid material, stimulation of a mechanical vibration, and contact with a hot gas, or through a combination of at least two thereof. A hot material preferably has a temperature above a melting temperature of a sealant.

In a preferred embodiment of the process 2, in step (c), the container precursor is obtained, wherein, in a further step, the container precursor is filled with a foodstuff.

In a preferred embodiment of the process 2, in step (a), the sheet-like composite has at least one crease and, in step (b), folding takes place along the crease. The sheet-like composite preferably has at least 2, more preferably at least 3, more preferably at least 4, most preferably at least 10, creases.

A contribution to the fulfilment of at least one of the objects according to the invention is made by a container precursor 2, obtainable through the process 2.

A contribution to the fulfilment of at least one of the objects according to the invention is made by a process 3 for the production of a container, comprising the following steps:
a) Provision of the container precursor 1 or of the container precursor 2; and
b) Closing of the container precursor with a closing tool.

In a preferred embodiment of the process 3 the container precursor is filled with a foodstuff before being closed. It is preferable for the container precursor to be a tubular structure with a fixed longitudinal seam. This tubular structure is compressed laterally, fixed and separated and formed into an open container by folding, and sealing or gluing. The foodstuff here can already be filled into the container prior to fixing and prior to the separation and folding of the base.

A contribution to the fulfilment of at least one of the objects according to the invention is made by a container 2, obtainable through the process 3.

A contribution to the fulfilment of at least one of the objects according to the invention is made by a use 1 of the sheet-like composite 1, or of the sheet-like composite 2 for the production of a container.

A contribution to the fulfilment of at least one of the objects according to the invention is made by a use 2 of the container 1, or of the container 2 for introducing a foodstuff into the container. The foodstuff is preferably stored in the container.

In a further embodiment according to the invention of the sheet-like composite 1 the m-polyolefin is characterised by a multimodal molecular weight distribution.

In a further embodiment according to the invention of the process 1 the m-polyolefin is characterised by a multimodal molecular weight distribution.

### Antioxidant

In general, substances are described as antioxidants which are suitable for binding radicals. This mostly takes place through double or triple bonds, which are preferably part of a conjugated and further preferred aromatic compound. It is further preferable for the conjugated and aromatic compounds to be sterically hindered by alkaline substitutes, which are preferably branched. It is further preferable for these compounds to form a double or triple bond with a heteroatom, preferably selected from the group comprising N, P, O, and S, or a combination of at least two thereof, preferably N or O. The first antioxidant or the second antioxidant or both are preferably an amine or a phenol derivative or both. A preferred first antioxidant is a phenol derivative. A preferred second antioxidant is a phenol derivative. A preferred amine is a sterically hindered amine. A preferred phenol derivative is a sterically hindered phenol derivative. A particularly preferred phenol derivative is a triaryl phosphite or a tetrakisaryl propionate or both. A preferred triaryl phosphite is tris-(2,4-di-tert-butylphenyl) phosphite. A particularly preferred tris(2,4-di-tert-butylphenyl) phosphite is Irganox^{®} 1010 marketed by Ciba Specialty Chemicals, Inc. A preferred tetrakisaryl propionate is tetrakis(3-(3,5-di-tert-butyl-4-hydroxyphenyl) propionate. A particularly preferred tetrakis(3-(3,5-di-tert-butyl-4-hydroxyphenyl) propionate is Ciba^{®} Irgafos^{®} 168 marketed by Ciba Specialty Chemicals, Inc. A mixture of Irganox^{®} 1010 and Ciba^{®} Irgafos^{®} 168, both marketed by Ciba Specialty Chemicals, Inc. is quite particularly preferred.

### Layer sequence

The layers of the layer sequence are joined together. The term "joined" or "composite" used here includes the adhesion of two objects going beyond Van der Waals forces of attraction. Unless otherwise indicated, in the layer sequence these layers can follow one another either indirectly, that is with one or at least two intermediate layers, or directly, that is without an intermediate layer. For the sheet-like composite this means, for example, that the barrier layer can be joined directly and therefore immediately to the first polyolefin layer or can also be joined indirectly via an adhesion promoter layer. Furthermore, the further polyolefin layer can also be joined directly to the carrier layer. However, there can also be further objects in between, for example in the form of further polymer layers, wherein a direct join is preferable. The wording "comprising a layer sequence", as used above, means that in the sheet-like composite at least the specified layers are present in the specified sequence. This wording does not necessarily imply that these layers follow each other directly.

### Polyolefin layers

The first polyolefin layer, as well as the further polyolefin layers, as well as all further polymer layers can have further components. These polyolefin layers are preferably introduced into or applied to the sheet-like composite material in an extrusion procedure. The further components of the polyolefin layers are preferably components which do not adversely affect the behaviour of the molten polymer when the layer is applied. The further components can, for example, be inorganic compounds, such as metal salts or further plastics, such as further thermoplastic plastics. However, it is also conceivable that the further components are fillers or pigments, for example carbon black or metal oxide. For the further components, suitable thermoplastic plastics are considered to be those that are easy to process due to good extrusion behaviour. They include polymers obtained through chain polymerisation, in particular polyester or polyolefin, among these cyclic olefin copolymers (COC), polycyclic olefin copolymers (POC), in particular polyethylene and polypropylene being particularly preferred and polyethylene being quire particularly preferred. Among the polyethylenes, HDPE, MDPE, LDPE, LLDPE, VLDPE and PE and mixtures of at least two thereof are preferred. Mixtures of at least two thermoplastic plastics can also be used. Suitable polyolefin layers have a melt flow rate (MFR) in a range of from 1 to 25 g/10 min, preferably in a range of from 2 to 20 g/10 min and more preferably in a range of from 2.5 to 15 g/10 min, and a density in a range of from 0.890 g/cm³ to 0.980 g/cm³, preferably in a range of from 0.895 g/cm³ to 0.975 g/cm³, and further preferably in a range of from 0.900 g/cm³ to 0.970 g/cm³. The polyolefin layers preferably have at least one melting temperature in a range of from 80 to 155°C, preferably in a range of from 90 to 145°C and particularly preferably in a range of from 95 to 135°C. The sheet-like composite preferably comprises, between the barrier layer and the carrier layer, a polyolefin layer, preferably a polyethylene layer. The composite precursor further preferably comprises a polyolefin layer, preferably a polyethylene layer, between the barrier layer and the carrier layer.

### Carrier layer

The carrier layer of the container according to the invention can conventionally be made of any material which appears to be suitable to the person skilled in the art for this purpose and which has an adequate strength and rigidity to give the container stability to the extent that in the filled state the container essentially retains its shape. In addition to a number of plastics, plant-based fibrous substances, in particular celluloses, preferably sized, bleached and/or non-bleached celluloses are preferred, paper and cardboard being particularly preferred. The weight per square metre preferably lies in a range of from 120 to 450 g/m², particularly preferably in a range of from 130 to 400 g/m² and most preferably in a range of from 150 to 380 g/m². A preferred cardboard generally consists of one or more layers and can be coated on one or both sides with one or more top coats. A preferred cardboard also has a residual moisture content of less than 20 wt.-%, preferably from 2 to 15 wt.-% and particularly preferably from 4 to 10 wt.-% in relation to the total weight of the cardboard. A particularly preferred cardboard consists of several layers. Further preferably, the cardboard has, on the surface facing the environment, at least one, particularly preferably, however, at least two layers of a top layer, which is known to the person skilled in the art as "coat". In paper manufacturing "coat" mostly describes liquid phases containing inorganic solid particles, preferably solutions containing chalk, gypsum or clay, which are applied to the surface of the cardboard. A preferred cardboard also has a Scott Bond value in a range of from 100 to 360 J/m², preferably from 120 to 350 J/m² and particularly preferably from 135 to 310 J/m². Through the areas referred to above, it is possible to provide a composite out of which a container with a high degree of impermeability can be folded easily and with low tolerances.

### Barrier layer

As a barrier layer, any material can be used which appears to be suitable to the person skilled in the art for this purpose, which has a sufficient barrier effect in particular against oxygen. The barrier layer is preferably chosen from:
a. a plastic barrier layer;
b. a metal layer;
c. a metal oxide layer; or
d. a combination if at least two out of a. to c.

If the barrier layer according to alternative a. is a barrier layer of plastic, it preferably comprises at least 70 wt.-%, particularly preferably at least 80 wt.-% and most preferably at least 95 wt.-% of at least one plastic which is known to the person skilled in the art for this purpose in particular because of aroma and gas barrier properties which are suitable for packaging containers. Possible plastics, in particular thermoplastic plastics, here are plastics carrying N or O, both by themselves and in mixtures of two or more. According to the invention, it can prove advantageous for the barrier layer of plastic to have a melting temperature in a range of from more than 155 to 300°C, preferably in a range of from 160 to 280°C and particularly preferably in a range of from 170 to 270°C.

The barrier layer of plastic preferably has a surface weight in a range of from 2 to 120 g/m², preferably in a range of from 3 to 60 g/m², particularly preferably in a range of from 4 to 40 g/m² and further preferably from 6 to 30 g/m². Further preferably, the plastic barrier layer can be obtained by melting, for example by extrusion, in particular layer extrusion. The plastic barrier layer can also preferably be introduced into the sheet-like composite by lamination. A foil is preferably incorporated into the sheet-like composite. According to another embodiment, plastic barrier layers can also be chosen that can be obtained by separation from a solution or dispersion of plastics.

Suitable polymers are preferably those that have a weight average molecular weight determined by means of gel permeation chromatography (GPC) using light scattering in a range of from 3·10³ to 1·10⁷ g/mol, preferably in a range of from 5·10³ to 1·10⁶ g/mol and particularly preferably in a range of from 6·10³ to 1·10⁵ g/mol. Polyamide (PA) or polyethylene vinyl alcohol (EVOH) or a mixture thereof in particular are taken into consideration as suitable polymers.

Polyamides include all PAs that appear to be suitable to the person skilled in the art for the use according to the invention, in particular PA 6, PA 6.6, PA 6.10, PA 6.12, PA 11 or PA 12 or a mixture of at least two thereof, PA 6 and PA 6.6 being particularly preferred and PA 6 furthermore being preferred. PA 6 for example, is commercially obtainable under the trade names of Akulon^{®}, Durethan^{®} and Ultramid^{®}. Also suitable are amorphous polyamides such as MXD6, Grivory^{®} and Selar^{®} PA, for example. It is also preferable that the PA has a density in a range of from 1.01 to 1.40 g/cm³, preferably in a range of from 1.05 to 1.30 g/cm³ and more preferably in a range of from 1.08 to 1.25 g/cm³. It is also preferable for the PA to have a viscosity number in a range of from 130 to 185 ml/g and preferably in a range of from 140 to 180 ml/g.

Possible EVOHs are all EVOHs that appear to be suitable to the person skilled in the art for the use according to the invention. Examples include those commercially obtainable under the trade names EVAL^{™} marketed by EVAL Europe NV, Belgium in a plurality of different embodiments, for example the varieties EVAL^{™} F104B or EVAL^{™} LR171B. Preferred EVOHs have at least one, two, several or all of the following properties:
- an ethylene content in a range of from 20 to 60 mol-%, preferably from 25 to 45 mol-%;
- a density in a range of from 1.0 to 1.4 g/cm³, preferably from 1.1 to 1.3 g/cm³;
- a melting point in a range of from more than 155 to 235°C, preferably from 165 to 225°C;
- an MFR value (210°C/2.16 kg, if T_{S(EVOH)} < 230°C; 230°C/2.16 kg, if 210°C < T_{S(EVOH)} < 230°C) in a range of from 1 to 25 g/10 min, preferably from 2 to 20 g/10 min;
- an oxygen permeation rate in a range of from 0.05 to 3.2 cm³·20 µm/m²·day·atm, preferably in a range of from 0.1 to 1 cm³·20 µm/m²·day·atm.

According to alternative b. the barrier layer is a layer of metal. In principle, all metals that are known to the person skilled in the art which can create a high degree of impermeability to light and oxygen are suitable as a metal layer. According to a preferred embodiment, the metal layer can be present as a foil or as a deposited layer, for example after physical vapour deposition. The metal layer is preferably a continuous layer. According to a further preferred embodiment, the metal layer has a thickness in a range of from 3 to 20 µm, preferably in a range of from 3.5 to 12 µm and particularly preferably in a range of from 4 to 10 µm.

Chosen metals are preferably aluminium, iron or copper. An iron layer can preferably be a steel layer, for example in the form of a film. The metal layer is preferably a layer with aluminium. The aluminium layer can expediently consist of an aluminium alloy, for example AlFeMn, AlFe1.5Mn, AlFeSi or AlFeSiMn. Its purity is normally 97.5% and higher, preferably 98.5% and higher, both figures relating to the total aluminium layer. In a special embodiment, the metal layer consists of an aluminium foil. Suitable aluminium foils have an elasticity of more than 1%, preferably of more than 1.3% and particularly preferably of more than 1.5%, and a tensile strength of more than 30 N/mm², preferably of more than 40 N/mm² and particularly preferably of more than 50 N/mm². In the pipette test, suitable aluminium foils have a droplet size of more than 3 mm, preferably of more than 4 mm and particularly preferably of more than 5 mm. Suitable alloys for the production of aluminium layers or foils can be commercially obtained under the configurations EN AW 1200, EN AW 8079 or EN AW 8111 marketed by Hydro Aluminium Deutschland GmbH or Amcor Flexibles Singen GmbH.

In the case of a metal foil as a barrier layer, an adhesion promoter layer can be provided on one and/or both sides of the metal foil between the metal foil and an adjacent polymer layer. According to a special embodiment of the container according to the invention, however, a promoter layer is not provided between the metal foil and an adjacent polymer layer on either side of the metal film.

According to alternative c. a metal oxide layer can preferably be chosen as a barrier layer. All metal oxides layers which are familiar to the person skilled in the art and appear suitable for achieving a barrier effect against light, vapour and/or gas are taken into consideration as metal oxides layers. Metal oxides layers based on the aforementioned metals - aluminium, iron or copper - as well as metal oxide layers based on titanium or silicon oxide compound are particularly preferred. A metal oxide layer is generated, for example, by coating a plastic layer, for example an oriented polypropylene film, with metal oxide by means of vapour deposition. A preferred process is physical vapour deposition.

According to a further preferred embodiment, the metal layer of the metal oxide layer can be a layer composite constructed of one or more plastic layers with a metal layer. Such a layer is generated, for example, by coating a plastic layer, for example an oriented polypropylene film, with metal by means of vapour deposition. A preferred process is physical vapour deposition.

### Hole / opening aid

To facilitate the openability of the container and the sheet-like composites according to the invention, the carrier layer can have at least one hole. In a special embodiment, the hole is covered at least by the barrier layer and at least by the first polyolefin layer as hole cover layers. A sheet-like composite is preferred, wherein the carrier layer has at least one hole, which is covered at least by the barrier layer and at least by the first polyolefin layer. In addition, one or more layers, in particular adhesion promoter layers, can be provided between the aforementioned layers. In this context it is preferred that the hole cover layer are bonded together at least partially, preferably to at least 30%, preferably to at least 70% and particularly preferably to at least 90% of the surface formed by the hole. According to a special embodiment, the hole preferably penetrates the entire composite and is preferably covered by a hole closing and opening device. In connection with a first preferred embodiment, the hole provided in the carrier layer may have any form known to the person skilled in the art which is suitable for various closures, drinking straws and opening aids. The opening of a sheet-like composite or of a container with a sheet-like composite is mostly generated through the at least partial destruction of the hole cover layers covering the hole. This destruction can be caused by cutting, pressing into the container or pulling out of the container. The destruction can take place by means of an openable closure connected to the container and arranged in the area of the hole, mostly above the hole, or a drinking straw which is pushed through the hole cover layers covering the hole.

According to a further preferred embodiment, the carrier layer of the composite has a plurality of holes in the form of a perforation, wherein the individual holes are covered at least by the barrier layer and one of the first polyolefin layers as hole cover layers. A container produced from such a composite can then be opened by being torn along the perforation. Such holes for perforations are preferably generated by means of a laser. The use of laser beams is particularly preferred when the metal foil or a metalised foil is used as a barrier layer. It is also possible for the perforation to be introduced by means of mechanical perforation tools, mostly having blades.

According to a further preferred embodiment, the sheet-like composite is subjected to thermal treatment at least in the area of the at least one hole. In the case of several holes in the carrier layer present in the form of a perforation it is particularly preferred for this thermal treatment to be carried out in the area surrounding the hole. The thermal treatment can take place through radiation, through hot gas, through solid matter heat contact, through mechanical vibrations, preferably through ultrasound, or through a combination of least two of these measures. More preferably, the thermal treatment takes place through irradiation, preferably electromagnetic radiation and, particularly preferably, through electromagnetic induction or through hot gas. The optimum operating parameters to be selected in each case are known to the average person skilled in the art.

In the case of irradiation, any type of radiation known to the person skilled in the art to be suitable for softening plastics are taken into consideration. Preferred types of radiation are IR and UV rays, and microwaves. The preferred type of vibration is ultrasound. In the case of IR rays, which are also used for the IR welding of sheet-like composites, wavelengths are in a range of from 0.7 to 5 µm. Furthermore, laser beams in a wavelength range of from 0.6 to less than 1.6 µm can be used. In connection with the use of IR rays, these are generated by various suitable lamps which are known to the person skilled in the art. Short-wavelength lamps in a range of from 1 to 1.6 µm are preferably halogen lamps. Medium-wavelength lamps in a range of from > 1.6 to 3.5 µm are, for example, metal foil lamps. Quartz lamps are often employed as long wavelength lamps in a range of from > 3.5 µm. Lasers are ever more often deployed. Thus, diode lasers are employed in a wavelength range of from 0.8 to 1 µm, Nd:YAG lasers at approximately 1 µm and CO₂ lasers at approximately 10.6 µm. High frequency techniques with a frequency range of from 10 to 45 MHz, often in a power range of from 0.1 to 100 kW, are also used.

In the case of ultrasound, the following treatment parameters are preferred:

| | |
|---|---|
| P1 | a frequency in a range of from 5 to 100 kHz, preferably in a range of from 10 to 50 kHz and particularly preferably in a range of from 15 to 40 kHz; |
| P2 | an amplitude in a range of from 2 to 100 µm, preferably in a range of from 5 to 70 µm and particularly preferably in a range of from 10 to 50 µm; |
| P3 | a vibration time (as the period of time in which a vibrating body, such as a sonotrode or inductor, acts in contact vibration on the sheet-like composite) in a range of from 50 to 1000 msec, preferably in a range of from 100 to 600 msec and particularly preferably in a range of from 150 to 300 msec. |

For a suitable choice of the radiation or vibration conditions, it is advantageous to take into account the intrinsic resonances of the plastics and to choose frequencies close to these.

Heating via contact with a solid can be effected, for example, by a heating plate or heating mould which is in direct contact with the sheet-like composite and which releases the heat to the sheet-like composite. Hot air can be directed on to the sheet-like composite by suitable fans, outlets or nozzles or a combination thereof. Contact heating and hot gas are often employed simultaneously. Thus, for example, a holding device which holds a sleeve formed from the sheet-like composite and through which hot gas flows, and which is thereby heated and releases the hot gas through suitable openings can heat the sheet-like composite by contact with the wall of the holding device and the hot gas. Furthermore, the sleeve can also be heated by fixing the sleeve with a sleeve holder and directing a flow from one or two and more hot gas nozzles provided in the sleeve holder on to the regions of the sleeve to be heated.

### Adhesion / Adhesion promoter layers

Possible adhesion promoters in the adhesion promoter layer are all plastics which, through functionalisation by means of suitable functional groups, are suitable for generating a firm join by the formation of ionic bonds or covalent bonds to the surface of the other particular layer. These are preferably functionalised polyolefins, which are obtained through co-polymerisation of ethylene with acrylic acids, such as acrylic acid, methacrylic acid, crotonic acid, acrylates, acrylate derivatives, or double-bond bearing carboxylic acid anhydrides, for example maleic anhydride, or at least two thereof. Among these, polyethylene maleic anhydride graft- polymer (EMAH), ethylene acrylic acid copolymers (EAA) or ethylene methacrylic acid copolymere (EMAA) are preferred, these being marketed, for example, by DuPont under the trade names Bynel^{®} and Nucrel^{®}0609HSA or by ExxonMobile Chemicals under the trade name Escor^{®}6000ExCo.

According to the invention, the adhesion between the carrier layer, the first polyolefin layer, the further polyolefin layer or the barrier layer, preferably at least two thereof, and the next layer in each case are preferably at least 0.5 N/15 mm, preferably at least 0.7 N/15 mm and particularly preferably at least 0.8 N/15 mm. In an embodiment according to the invention, the adhesion between the further polyolefin layer and the carrier layer is preferably at least 0.3 N/15 mm, preferably at least 0.5 N/15 mm and particularly preferably at least 0.7 N/15 mm. The adhesion between the barrier layer and the first polyolefin layer is preferably at least 0.8 N/15 mm, preferably at least 1.0 N/15 mm and particularly preferably at least 1.4 N/15 mm. In the event that the barrier layer is made indirectly on the first polyolefin layer of the sheet-like composite via adhesion promoter layers, the adhesion between the barrier layer and the adhesion promoter layer is preferably at least 1.8 N/15 mm, preferably at least 2.2 N/15 mm and particularly preferably at least 2.8 N/15 mm. In a special embodiment of the sheet-like composite the adhesion between the individual layers is formed so strongly that, in the adhesion test, the carrier layer tears and, if cardboard is used as the carrier layer, this results in a so-called cardboard fibre tear. In an embodiment of the process according to the invention 1 for the production of a sheet-like composite, it is preferred that, to further improve the adhesion of two adjacent layers to each other, they undergo a surface treatment during coating for example. Flame treatment, plasma treatment, corona treatment or ozone treatment, among others, are known to the person skilled in the art as a suitable surface treatment process. However, other processes which cause the formation of functional groups on the surface of the treated layer are conceivable. In a special embodiment, at least one of these processes is used in the lamination of metal layers, in particular metal foils.

### Polyolefin

While, specifically, the polyolefin of the first polyolefin layer is an m-polyolefin, generally, a preferred polyolefin is a polyethylene or a polypropylene or both. A preferred polyethylene is one selected from the group comprising an LDPE, an LLDPE, and an HDPE, or a combination of at least two thereof. In addition to, specifically, the polyolefin of the first polyolefin layer being an m-polyolefin, generally, a further preferred polyolefin is an m-polyolefin. Suitable polyethylenes have a melt flow rate (MFR) in a range of from 1 to 25 g/10 min, preferably in a range of from 2 to 20 g/10 min and particularly preferably in a range of from 2.5 to 15 g/10 min, and a density in a range of from 0.910 g/cm³ to 0.935 g/cm³, preferably in a range of from 0.912 g/cm³ to 0.932 g/cm³, and further preferably in a range of from 0.915 g/cm³ to 0.930 g/cm³.

### m-polyolefin

An m-polyolefin is a polyolefin which is produced by means of a metallocene catalysis. A metallocene is an organometallic compound in which a central metal atom is arranged between two organic ligands, such as cyclopentadienyl ligands, for example. A preferred m-polyolefin is an m-polyethylene or an m-polypropylene or both. A preferred m-polyethylene is one selected from the group comprising an m-LDPE, an m-LLDPE, and an m-HDPE, or a combination of at least two thereof.

### Colour layer

A preferred colour layer comprises a colourant in a proportion in a range of from 5 to 15 wt.-%, preferably from 8 to 15 wt.-%, more preferably from 13 to 15 wt.-%, in relation to the colour layer. A further preferred colour layer also comprises an application medium. A preferred application medium is an organic medium. A preferred organic medium is an organic binder. A preferred organic binder is a thermoplastic. A preferred thermoplastic is polyvinyl butyral (PVB). The colour layer is preferably adjacent to the further polyolefin layer, wherein the further polyolefin layer is preferably adjacent to the carrier layer. The colour layer is preferably obtained through printing. A preferred printing process is offset printing or intaglio printing or both. A further preferred colour layer is not covered by a further layer of the layer sequence on a side facing away from the carrier layer.

### Colourant

A preferred colourant is a colour former in accordance with DIN 55943. A further preferred colourant is a pigment or a dye or both. A particularly preferred colourant is a pigment. A further preferred colourant is a natural colourant or a synthetic colourant or both. A further preferred colourant is one selected from the group comprising a white colourant, a black colourant, and a coloured colourant or a combination of at least two thereof. A further preferred colourant is an effect colourant or a light colourant or both.

### Pigment

A pigment is a colourant which is preferably insoluble in the application medium. A preferred pigment is one selected from the group comprising rutile, carbon black, cobalt blue, ultramarine blue, and chrome oxide green, or preferably a combination of at least two thereof.

### Dye

A due is a colourant which is preferably soluble in the application medium.

### Molecular weight distribution

A preferred multimodal molecular weight distribution is a bimodal molecular weight distribution or a trimodal molecular weight distribution or both.

### Melting temperatures

A preferred m-polyolefin is characterised by at least a first melting temperature and a second melting temperature. The m-polyolefin is preferably characterised by a third melting temperature in addition to the first melting temperature and the second melting temperature. A preferred first melting temperature lies in a range of from 84 to 108°C, preferably from 89 to 103°C, more preferably from 94 to 98°C. A preferred further melting temperature lies in a range of from 100 to 124°C, preferably from 105 to 119°C, more preferably from 110 to 114°C.

### Extrusion

During extrusion, the polyolefins and m-polyolefins are usually heated to temperatures of 210 to 330°C, measured at the molten polymer film underneath the outlet at the extruder nozzle. Extrusion can be performed using commercially available extrusion tools known to the person skilled in the art, such as extruders, barrel extruders and feedblocks, for example. At the end of the extruder there is preferably an opening through which the molten polymer is pressed. The opening can take any form that allows it to extrude the molten polymer onto the composite precursor. The opening can, therefore, be square, oval or round. The opening preferably has the shape of a slit of a funnel. In a preferred embodiment of the process, the molten polymer is applied through a slit. The slit preferably has a length in a range of from 0.1 to 100 m, preferably in a range of from 0.5 to 50 m, particularly preferably in a range of from 1 to 10 m auf. Furthermore, the slit preferably has a width in a range of from 0.1 to 20 mm, preferably in a range of from 0.3 to 10 mm, more preferably in a range of from 0.5 to 5 mm. While the molten polymer is being applied, the slit and the composite precursor preferably move relative to each other. A process is therefore preferred, wherein the composite precursor moves relative to the slit.

According to a further preferred embodiment of the process according to the invention for the production of a sheet-like composite, the molten polymer is preferably stretched during application, wherein this stretching preferably takes place through melt stretching, quite particularly preferably through monoaxial melt stretching. To this end, the layer is applied in a molten state to the composite precursor by means of a melt extruder and the applied layer, still in its molten state, is then stretched in a preferably monoaxial direction in order to orientate the polymer in this direction. Then, the applied layer is allowed to cool for the purpose of heat setting. In this connection, it is particularly preferred for the molten polymer to be stretched by means of the following application steps at least:

| | |
|---|---|
| b1. | Discharge of the molten polymer as a melt film through at least one extruder nozzle slit at a discharge speed of V_{dis.}; |
| b2. | Application of the melt film to the composite precursor moving relative to the at least one extruder nozzle slit at a movement speed of V_{c.p.}; |

wherein V_{dis} is < V_{c.p.} In particular, V_{c.p.} is preferably greater than V_{dis.} by a factor in a range of from 5 to 200, preferably in a range of from 7 to 150, more preferably in a range of from 10 to 50 and most preferably in a range of from 15 to 35. V_{c,p.} is preferably greater than at least 100 m/min, more preferably at least 200 m/min and most preferably at least 350 m/min, but not normally above 1300 m/min. After the melt layer has been applied to the composite precursor by means of the stretch process described above, the melt layer is allowed to cool for the purpose of heat setting, wherein this cooling is allowed to take place preferably through chilling through contact with a surface which is kept at a temperature in a range of from 5 to 50°C, particularly preferably in a range of from 10 to 30°C. As described above, after heat setting it can be particularly advantageous if the sheet-like composite is thermally treated at least in the area of the at least one hole in order to cancel the orientation of the polymers.

According to a further preferred embodiment, the discharged surface is cooled to a temperature below the lowest melting temperature of the polymers provided for in this surface or its edges and then at least the edges of the surface are separated from this surface. Cooling can take place in any way that is familiar to and appears to be suitable to the person skilled in the art for this purpose. The heat setting described above is also preferred here. Then, at least the edges are separated from the surface F. Separation can take place in any way that is familiar to and appears to be suitable to the person skilled in the art for this purpose. Separation preferably takes place through knives, laser beam or water jet or a combination of two thereof, wherein the use of knives, in particular knives with a scissor-like cutting action is particularly preferred.

### Folding of the sheet-like composite

In connection with the process according to the invention 2 for the production of a container precursor, the folding preferably take place within a temperature range of from 10 to 50°C, preferably in a range of from 15 to 45°C and particularly preferably in a range of from 20 to 40°C. This can be achieved if the sheet-like composite has a temperature within the aforementioned ranges. A folding tool, preferably together with the sheet-like composite, preferably has a temperature within the aforementioned range. For this purpose, the folding tool does not have heating. Rather, the folding tool or the sheet-like composite, or both, can be cooled. Further, the folding preferably takes place as cold folding at a maximum temperature of 50°C and that joining in step (c) preferably takes place as heat-sealing at a temperature of more than 50°C, preferably more than 80°C and particularly preferably more than 120°C. The conditions set out above and, in particular the temperatures preferably also apply in the immediate vicinity of the folding, for example in the housing of the folding tool. In a further embodiment of the process according to the invention 2, cold folding, or cold folding in combination with heat-sealing, is preferably used at angles formed during folding µ of less than 100°, preferably less than 90°, particularly preferably less than 70° and most preferably less than 50°. The angle µ is formed by two adjacent fold surfaces.

In the process according to the invention, "folding" is understood as meaning an operation in which preferably an elongated crease forming an angle is generated in the folded sheet-like composite by means of a folding edge of a folding tool. For this, two adjacent surfaces of a sheet-like composite are often bent ever more towards one another. The folding gives rise to at least two adjacent fold surfaces, which can then by joined, at least in part regions, to form a container region. According to the invention, the joining can be effected by any measure which appears to be suitable to the person skilled in the art and which makes possible a join which is as gas- and water-tight as possible. The joining can be effected by sealing or gluing or a combination of the two measures. In the case of sealing, the join is created by means of a liquid and solidification thereof. In the case of gluing, chemical bonds which create the join form between the interfaces or surfaces of the two objects to be joined. In the case of sealing or gluing, it is often advantageous for the surfaces to be sealed or glued to be pressed together with one another.

In a further embodiment of the process according to the invention 2, it is preferable for the fold surfaces to form an angle µ of less than 90°, preferably of less than 45° and particularly preferably of less than 20°. The fold surfaces are often folded to the extent that these come to lie on one another at the end of the folding. This is advantageous in particular if the fold surfaces lying on one another are subsequently joined to one another in order to form the container base and the container top, which is configured gable-like or also flat. Regarding the gable configuration, reference may be made by way of example to WO 90/09926 A2.

### Foodstuff

All foodstuffs known to the person skilled in the art for human consumption and also animal feed are possible as the foodstuff. Preferred foodstuffs are liquids above 5 °C, for example dairy products, soups, sauces, and non-carbonated drinks. The container or the container precursor can be filled in various ways. On the one hand, prior to filling, the foodstuff and the container or the container precursor can be separately sterilised as far as possible through suitable measures such as treating the container or the container precursor with H₂O₂, UV radiation or other suitable high-energy radiation, plasma treatment or a combination of at least two thereof, and by heating the foodstuff and then filling it into the container or the container precursor. This type of filling is often referred to as "aseptic filling" and is preferred according to the invention. In addition to or instead of aseptic filling, heating the container or the container precursor after it has been filled with a foodstuff in order to reduce the germ count is widespread. This is carried out preferably by pasteurisation or autoclaving. With this procedure, less sterile foodstuffs and containers or container precursors can be used.

### Container

The container according to the invention can take a variety of different forms. An essentially cuboid structure is, however, preferred. The container can be formed completely out of the sheet-like composite or have a two-part or multi-part structure. In the case of a multi-part structure, it is conceivable that, in addition to the sheet-like composite, other materials can also be used, such as plastic, for example, which can be used in particular in the container base and the container top. However, it is preferable for the container to be formed to the extent of at least 50%, preferably to the extent of at least 70% and moreover preferably to the extent of at least 90% of their surface from the sheet-like composite. The container can also have a device for emptying the contents. This can be formed from plastic, for example, and be attached to the outside of the container. It is also conceivable for this device to be integrated into the container by direct injection moulding. According to a preferred embodiment, the container according to the invention has at least one, preferably from 4 to 22 or more edges, particularly preferably from 7 to 12 edges. According to the invention, edge is understood as meaning regions which are formed on the folding of a surface. Edges which may be mentioned by way of example are the elongated contact regions of respectively two wall surfaces of a container. In the container, the container walls preferably represent the surfaces of the container framed by the edges.

### Measuring Methods

The following measuring methods were used in the context of the invention. Unless otherwise indicated, the measurements were carried out at an ambient temperature of 25°C, an atmospheric pressure of 100 kPa (0.986 atm) and a relative humidity of 50%.

### MFR value

The MFR value is measured in accordance with ISO 1133 (at 190°C and 2.16 kg unless otherwise specified).

### Density

Density is measured in accordance with ISO 1183-1.

### Melting temperature

Melting temperature is determined using the DSC process in accordance with ISO 11357-1, -5. Instrument calibration is carried out in accordance with the manufacturer's specifications using the following measurements:
- indium temperature - onset temperature,
- indium melting heat,
- zinc temperature - onset temperature.

### Molecular weight distribution

Molecular weight distribution is measured by means of light scattering using gel permeation chromatography: ISO 16014-3/-5.

### Viscosity number of the PA

The viscosity number of the PA is measured in accordance with ISO 307 in 95% sulphuric acid.

### Oxygen permeation rate

The oxygen permeation rate is determined in accordance with ISO 14663-2 Annex C at 20°C and 65% relative humidity.

### Moisture content of the cardboard

The moisture content of the cardboard is measured in accordance with ISO 287:2009.

### Adhesion

In order to determine the adhesion of two adjacent layers, they are fixed to a 90° peel test device, such as the "German rotating wheel fixture" manufactured by Instron, for example, on a rotating drum, which rotates at 40 mm/min during the measurement. The samples are cut into 15 mm strips beforehand. On one side of the sample, the layers are detached from one another and the detached end is clamped into a traction device directed vertically upwards. A measuring device is mounted on the traction device in order to determine the traction force. When the drum is rotated, the force required to separate the layers from each other is measured. This force corresponds to the adhesion of the layers to each other and is given in N/15 mm. The individual layers can be separated mechanically, or through targeted pretreatment, for example soaking the sample for 3 min in 30% acetic acid at 60°C.

### Proportion of antioxidants

The proportion of antioxidants is measured in accordance with the process specified in D6953 - 11, Copyright ASTM International, published by Beuth Verlag (Am DIN-Platz, 10787 Berlin). The process described therein only relates to polyethylene, the proportion of antioxidants of which is determined. For other polyolefins and antioxidants other than those listed in D6953 - 11, extraction agents which appear to be suitable to the person skilled in the art for this purpose are used. Suitable extraction agents are suitable for extracting and eluting the antioxidants from the polyolefin without dissolving the polyolefin. Suitable extraction agents are known to the person skilled in the art. Some extraction agents are proposed in Section 5.2 of D6953 - 11. For polyethylene as polyolefin, the extraction agent is chosen on the basis of the instructions in Note 4 in D6953 - 11. When using the process in accordance with D6953 - 11 the following parameters must be chosen:

Terminology must be used in accordance with IEEE/ASTM SI 10 (see Section 3.2.2). A C-8-chromatography column must be used (see Section 7.2). The sample must be reduced to a particle size of 1 mm (approx. 20 mesh) (see Section 10.1.1). Calibration is carried out by injection of single-component solutions (see Section 13.1).

### Adhesive strength of the colour layer

The adhesive strength of a colour layer is understood as meaning the ability of the colour layer to resist forces when a strip of adhesive tape is torn off the surface of the colour layer. In the test, the adhesive tape used is a 20 mm-wide Tesaband 4104 marketed by Beiersdorf AG, Hamburg. The laminate to be tested is placed with the colour layer facing upwards on a hard, smooth, level surface. For each test run-through, a strip of Tesaband 4104 is glued to the colour layer over a length of at least 30 mm and pressed down evenly with the thumb. The assessment is made within 30 seconds of the Tesaband being glued down. If the adhesive tape stays longer on the colour layer, this can lead to divergent results. The assessment is made by stripping off the strip of adhesive tape
a) either in a jerky movement at an angle of 90°,
b) or slowly and in a peeling movement (at an angle of less than 45° to the colour layer).

For both types of test a) and b) 3 test run-throughs are carried out at different points of the colour layer. The results are assessed with the naked eye using the following scale. The results improve from 1 to 5.
5 - Colour layer does not come off
4 - Colour layer comes off at individual isolated points
3 - Colour layer clearly comes off at individual points
2 - Colour layer comes off over a larger surface
1 - Colour layer comes off completely in relation to the surface of the adhesive strip

The 6 results are averaged out to form a mean value, which corresponds to the final result of the measurement.

### Stability of the colour layer under increased temperature and humidity

The laminates to be tested are subjected to heat and humidity in a water bath for 60 seconds at a temperature of 94°C. The water bath is in a beaker and is constantly stirred with a magnetic stirrer in order to guarantee an even temperature distribution. The temperature is checked with a thermometer and the time is measured with a stop watch. After 60 seconds the laminate remains in the water bath where it is rubbed across the colour layer with a glass rod with rounded corners under slight pressure. Then, the laminate is taken out of the bath and the colour layer is inspected for damage with the naked eye. The assessment is made in accordance with the following scale, wherein the results improve from 1 to 5.
1 - The colour layer is completely scraped off
2 - The colour layer has suffered serious damage
3 - The colour layer has suffered less serious but obvious damage
4 - The colour layer has suffered only slight damage
5 - The colour layer has not suffered any damage

The present invention is now explained in more detail by drawings given by way of example which do not limit it.

### Example 1 (not according to the invention)

The sheet-like composites according to example 1 were produced by means of an extrusion coating process. For the sheet-like composite according to example 1 a carrier layer with holes for closures or drinking straws, if appropriate, is presented, on which polymer layers are applied. This is carried out on a commercial coating machine, on which the further layers listed in Table 1 were also produced. The outermost LDPE layer (3), which is arranged on the carrier layer (2) was imprinted with a colour layer forming a decoration. The laminate produced in this way was rolled up into a roll, wherein the innermost m-PE blend layer (4) came into full-area contact with the colour layer. The roll was stored for a month. Then, measurements were carried out of the parameters listed in Table 3.

**Table 1:**

| Example 1 | Weight per unit area | |
|---|---|---|
| LDPE | 15 g/m² | (3) |
| Carrier | 210 g/cm² | (2) |
| LDPE | 18 g/m² | (3) |
| Barrier | 6 µm | (1) |
| Adhesion promotor | 4 g/m² | (5) |
| LDPE | 22 g/m² | (3) |
| m-PE blend | 10 g/m² | (4) |

| | | |
|---|---|---|
| (1) Aluminium: EN AW 8079 marketed by Hydro Aluminium Deutschland GmbH, thickness = 6 µm (2) Cardboard: Liquid Packaging Board Stora Enso Natura T Duplex marketed by Stora Enso AG, double bar, Scott Bond value 200 J/m², residual moisture 7.5 % (3) LDPE 19N430 marketed by Ineos Köln GmbH (4) m-PE blend: 35 wt.-% Affinity^{®} PT 1451G1 marketed by The Dow Chemical Co. AG (with a standard antioxidant package) and 65 wt.-% LDPE 19N430 marketed by Ineos Köln GmbH (5) Escor 6000 HSC marketed by Exxon Mobil Corporation | | |

### Example 2 (according to the invention)

The sheet-like composites were produced by means of an extrusion coating process. For the sheet-like composite according to example 2 a carrier layer with holes for closures or drinking straws is presented, on which polymer layers are applied. This is carried out on a commercial coating machine, on which the further layers listed in Table 1 were also produced. The outermost LDPE layer (3), which is arranged on the carrier layer (2), was imprinted with a colour layer forming a decoration. The laminate produced in this way was rolled up into a roll, wherein the innermost m-PE blend layer (6) came into full-area contact with the colour layer. The roll was stored for a month. Then, measurements were carried out of the parameters listed in Table 3.

**Table 2:**

| Example 2 | Weight per unit area | |
|---|---|---|
| LDPE | 15 g/m² | (3) |
| Carrier | 210 g/cm² | (2) |
| LDPE | 18 g/m² | (3) |
| Barrier | 6 µm | (1) |
| Adhesion promoter | 4 g/m² | (5) |
| LDPE | 22 g/m² | (3) |
| m-PE blend | 10 g/m² | (6) |

| | | |
|---|---|---|
| (1) Aluminium: EN AW 8079 marketed by Hydro Aluminium Deutschland GmbH, thickness = 6 µm (2) Cardboard: Liquid Packaging Board Stora Enso Natura T Duplex marketed by Stora Enso AG, Doppelstrich, Scott Bond value 200 J/m², residual moisture 7.5 % (3) LDPE 19N430 marketed by Ineos Köln GmbH (6) m-PE blend: 35 wt.-% Eltex 1315 AZ marketed by Ineos Köln GmbH and 65 wt.-% LDPE 19N430 marketed by Ineos Köln GmbH (5) Escor 6000 HSC marketed by Exxon Mobil Corporation | | |

**Table 3:**

| Example | Adhesive strength of the colour layer | Stability of the colour layer under increased temperature and humidity | Sealing behaviour | Sliding friction |
|---|---|---|---|---|
| 1 | 1 | 2 | + | - |
| 2 | 5 | 5 | + | + |

In Table 3, a "+" indicates a more advantageous result than a "-". The numerical values for the adhesive strength of the colour layer and the stability of the colour layer under increased temperature and humidity refer to the scale given above for both properties.

As can be seen from Table 3, the colour layer of example 2 has an advantageous adhesive strength of the colour layer and an advantageous stability of the colour layer under increased temperature and humidity compared to example 1, in each case in accordance with the above measuring processes. The innermost m-PE blend layers (4) and (6) of examples 1 and 2 can essentially be equally well sealed with no laminate setting itself apart as advantageous compared to the other. Furthermore, the sliding friction of the laminate according to example 2 is advantageous compared to that of example 1. This is expressed in the fact that the container precursors ("sleeves") from the laminates according to example 2 can be isolated more easily from stacks of such container precursors. This means that fewer errors occur in the production process and downtimes could be reduced by approximately 50% compared to example 1.

The figures show:
- Figure 1: shows a schematic cross-section through a sheet-like composite according to the invention;
- Figure 2: shows a schematic cross-section through a further sheet-like composite according to the invention;
- Figure 3: shows a schematic cross-section through a further sheet-like composite according to the invention;
- Figure 4: shows a schematic representation of a container precursor according to the invention;
- Figure 5: shows a schematic representation of a container precursoraccording to the invention;
- Figure 6: shows a schematic process flow diagram of a process according to the invention for the production of a sheet-like composite;
- Figure 7: shows a schematic process flow diagram of a further process according to the invention for the production of a sheet-like composite;
- Figure 8: shows a schematic process flow diagram of a process according to the invention for the production of a container precursor;
- Figure 9: shows a schematic process flow diagram of a process according to the invention for the production of a container; and
- Figure 10: shows a schematic process flow diagram of a further process according to the invention for the production of a container.

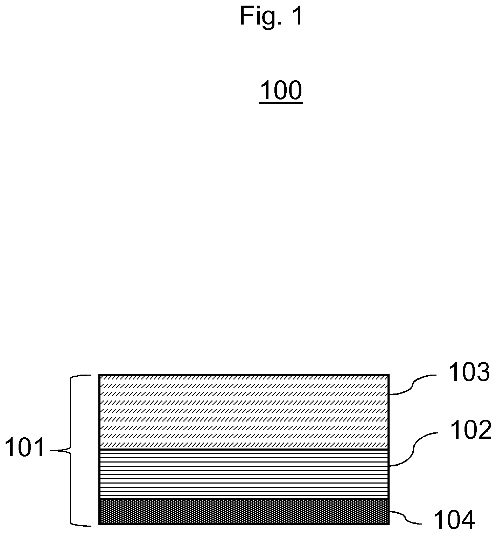

Figure 1 shows a schematic cross-section through a sheet-like composite according to the invention 100. The sheet-like composite 100 comprises a layer sequence 101. The layer sequence 101 comprises, as layers: a first polyolefin layer 104, a barrier layer 102 made of aluminium, and a carrier layer 103 made of paper. The first polyolefin layer 104 comprises an m-LLDPE in a proportion of 100 wt.-%, in relation to the total weight of the first polyolefin layer 104. There is also a polyethylene layer (not shown) between the carrier layer 103 and the barrier layer 102. The first polyolefin layer 104 and the one polyethylene layer each contain no antioxidants.

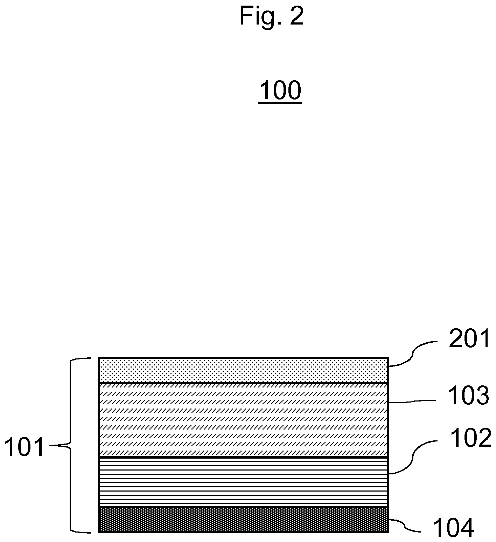

Figure 2 shows a schematic cross-section through a further sheet-like composite according to the invention 100. The sheet-like composite 100 comprises a layer sequence 101. The layer sequence 101 comprises, as layers: a first polyolefin layer 104, a barrier layer 102, a carrier layer 103 made of paper, and a further polyolefin layer 201. The barrier layer 102 is a plastic barrier layer containing an EVOH in a proportion of at least 95 wt.-% in relation to the total weight of the barrier layer. The further polyolefin layer 201 comprises an LDPE in a proportion of 95 wt.-% in relation to the total weight of the further polyolefin layer. The further polyolefin layer 201 also comprises a mixture of Irganox^{®} 1010 marketed by Ciba Specialty Chemicals, Inc. and Ciba^{®} Irgafos^{®} 168 marketed by Ciba Specialty Chemicals, Inc. in a proportion of 40 wt.-ppm in relation to the total weight of the further polyolefin layer. The further polyolefin layer 201 does not contain any further antioxidants. The first polyolefin layer 104 consists of an m-polypropylene in a proportion of 90 wt.-% in relation to the total weight of the first polyolefin layer 104. The first polyolefin layer 104 also comprises a mixture of Irganox^{®} 1010 marketed by Ciba Specialty Chemicals, Inc. and Ciba^{®} Irgafos^{®} 168 marketed by Ciba Specialty Chemicals, Inc. in a proportion of 40 wt.-ppm in relation to the total weight of the first polyolefin layer 104. The first polyolefin layer 104 does not contain any further antioxidants. There is also a polyethylene layer (not shown) between the carrier layer 103 and the barrier layer 102.

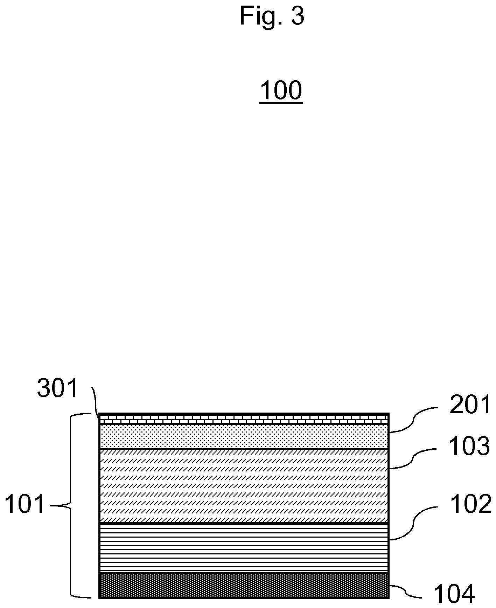

Figure 3 shows a schematic cross-section through a further sheet-like composite according to the invention 100. The sheet-like composite 100 comprises a layer sequence 101. The layer sequence 101 comprises, as layers: a first polyolefin layer 104, a barrier layer 102 made of aluminium, a carrier layer 103 made of cardboard, a further polyolefin layer 201, and a colour layer 301. The first polyolefin layer 104 consists of an m-LLDPE in a proportion of 100 wt.-% in relation to the total weight of the first polyolefin layer 104. The further polyolefin layer 201 consists of an LDPE in a proportion of 100 wt.-% in relation to the total weight of the further polyolefin layer 201. The colour layer 301 is imprinted on the further polyolefin layer 201. The colour layer 301 comprises a mixture of white, black and coloured pigments in a proportion of 14 wt.-%, in relation to the total weight of the colour layer 301. The colour layer 301 is not overlaid by any layer of the sheet-like composite 100 on the side facing away from the carrier layer 103. There is also a polyethylene layer (not shown) between the carrier layer 103 and the barrier layer 102.

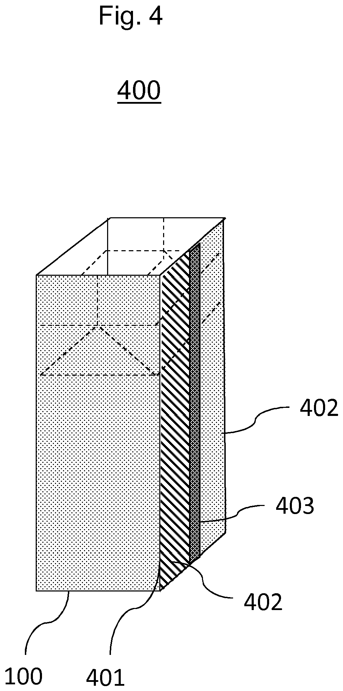

Figure 4 shows a schematic representation of a container precursor according to the invention 400. The container precursor 400 comprises the sheet-like composite 100 shown in Figure 3. The container precursor 400 also comprises a fold with fold surfaces 402 adjacent to one another. Both fold surfaces 402, which adjoin at the fold 401, overlap in the part regions 403 of both fold surfaces 402. These part regions 403 are joined to one another by a seal and form a longitudinal seam of the container precursor 400. The container precursor 400 is closed in the region of the base by folding and sealing. The container precursor 400 is opened in the region of the top.

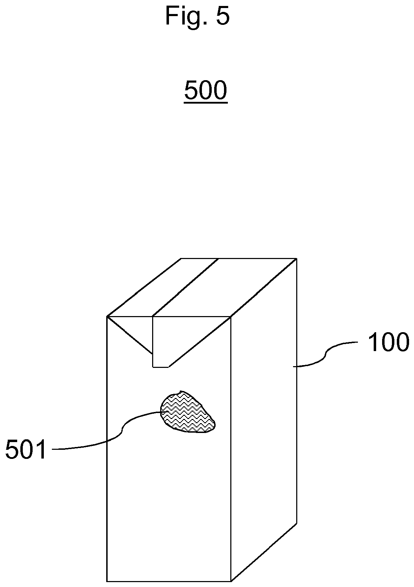

Figure 5 shows a schematic representation of a container according to the invention 500. The container 500 is closed in the region of the top and in the region of the base. The container 500 is closed. The container is a cuboid structure and comprises 12 edges and 6 rectangular surfaces. The container encloses an interior 501. The interior 501 contains a foodstuff. The foodstuff is a Sauce Béarnaise. The container 500 comprises the sheet-like composite 100 shown in Figure 3. The colour layer 301 is an imprint advertising the Sauce Béarnaise and listing its ingredients.

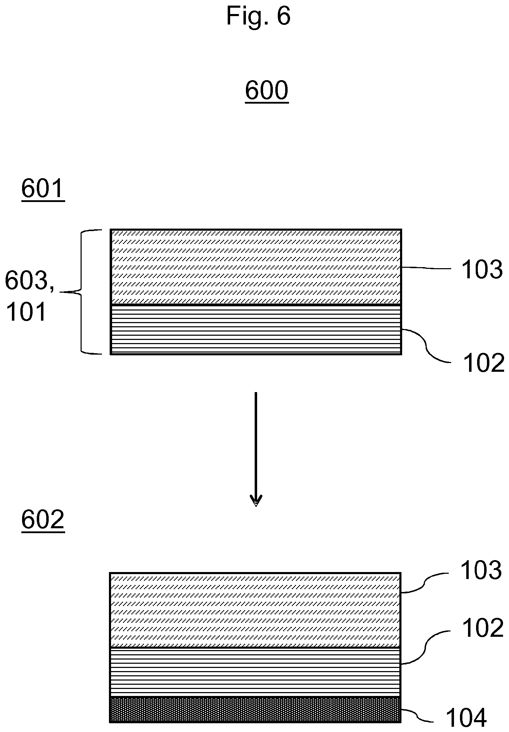

Figure 6 shows a schematic process flow diagram of a process according to the invention 600 for the production of a sheet-like composite 100. The sheet-like composite 100 according to Figure 1 is produced by the process 600. In a step a) 601 of the process 600, a composite precursor 603 comprising, as layer sequence 101, a barrier layer 102 and a carrier layer 103, both shown in Figure 1, is provided. There is also a polyethylene layer (not shown) between the carrier layer 103 and the barrier layer 102. In a step b) 602, the first polyolefin layer 104 is superimposed on the barrier layer 102 through extrusion. The first polyolefin layer 104 is configured as shown in Figure 1.

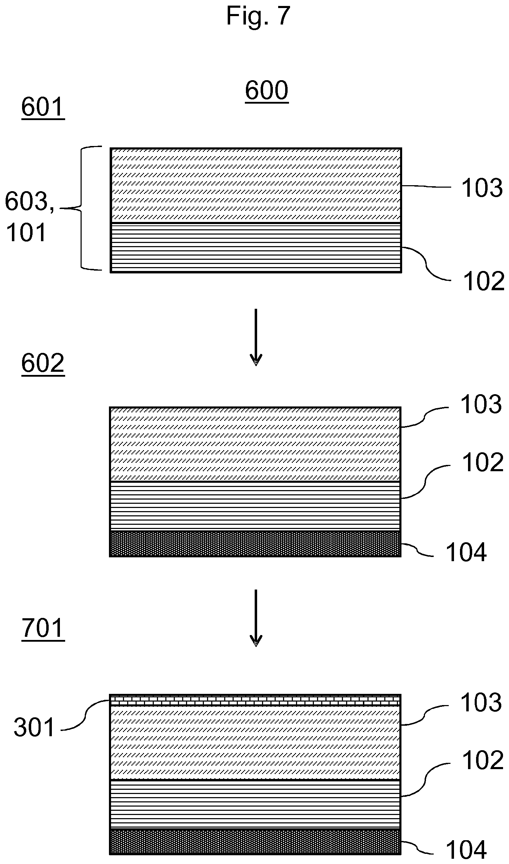

Figure 7 shows a schematic process flow diagram of a further process according to the invention 600 for the production of a sheet-like composite 100. The process 600 according to Figure 7 is the process 600 from Figure 6, wherein the process 600 shown in Figure 7 comprises, as further step: superimposition of a colour layer 301 on the carrier layer 103 on a side facing away from the barrier layer 102. The colour layer 301 is imprinted on the carrier layer 103. The colour layer 301 comprises a mixture of white, black and coloured pigments in a proportion of 12 wt.-% in relation to the total weight of the colour layer 301. The colour layer 301 is not overlaid by any layer of the sheet-like composite 100 on the side facing away from the carrier layer 103.

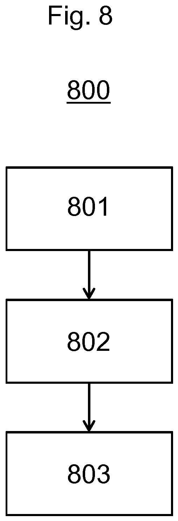

Figure 8 shows a schematic process flow diagram of a process according to the invention 800 for the production of a container precursor 400 as shown in Figure 4. The process 800 comprises a step a) 801: provision of a sheet-like composite 100 as shown in Figure 3; a step b) 802: folding of the sheet-like composite 100 to form a fold 401 with at least two adjacent fold surfaces 402; and a step c) 803: joining of at least one of the part regions 403 of the at least two fold surfaces 402 with the appropriate other part region 403 by sealing. In step c) 803, the longitudinal seam of the container precursor 400 is formed. The folding in step b) 802 is carried out by cold folding, and the sealing in step c) is carried out as hot sealing by ultrasound transmitted by a sonotrode.

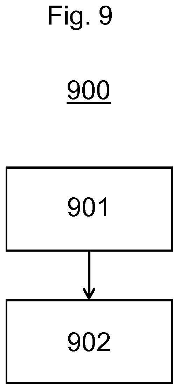

Figure 9 shows a schematic process flow diagram of a process according to the invention 900 for the production of a container 500 as shown in Figure 5. The process 900 comprises a step a) 901: provision of a container precursor 400. The container precursor 400 comprises the sheet-like composite 100 as shown in Figure 3. The container precursor 400 also comprises a fold with fold surfaces 402 adjacent to one another. Both fold surfaces 402, which adjoin at the fold 401, overlap in the part regions 403 of both fold surfaces 402. Both these part regions 403 are joined to one another by a seal and form a longitudinal seam of the container precursor 400. The container precursor is a tubular structure. In a step b) 902 of the process 900 the container precursor 400 is closed with a closing tool. For this purpose, the container precursor 400 is compressed laterally, fixed and, in the direction of the tube a part of the tubular container precursor 400 is separated. This part is provided with a base region through folding and sealing, which is closed. This results in an open container. The open container is provided with a top region by folding, and sealing or gluing, which is closed in order to receive the closed container 500.

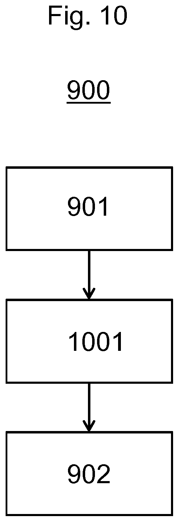

Figure 10 shows a schematic process flow diagram of a further process according to the invention 900 for the production of a container 500. The process 900 in Figure 10 is the process in Figure 9, wherein the process in Figure 10 comprises a further step 1001 between step a) 901 and step b) 902. In the further step 1001, the container precursor 400 is filled with a foodstuff, Sauce Béarnaise. Filling takes place prior to the separation of the part of the tubular container precursor 400.

### List of reference Symbols

- 100: Sheet-like composite according to the invention
- 101: Layer sequence
- 102: Barrier layer
- 103: Carrier layer
- 104: First polyolefin layer
- 201: Further polyolefin layer
- 301: Colour layer
- 400: Container precursor according to the invention
- 401: Fold
- 402: Adjacent fold surfaces
- 403: Part regions joined by sealing
- 500: Closed container according to the invention
- 501: Interior
- 600: Process for the production of a sheet-like composite according to the invention
- 601: Step a) of the process for the production of a sheet-like composite
- 602: Step b) of the process for the production of a sheet-like composite
- 701: Further step of the process for the production of a sheet-like composite
- 800: Process according to the invention for the production of a container precursor
- 801: Step a) of the process for the production of a container precursor
- 802: Step b) of the process for the production of a container precursor
- 803: Step c) of the process for the production of a container precursor
- 900: Process according to the invention for the production of a container
- 901: Step a) of the process for the production of a container
- 902: Step b) of the process for the production of a container
- 1001: Filling with a foodstuff

## Claims

1. A sheet-like composite (100), comprising, as layer sequence (101):
a) a first polyolefin layer (104), comprising
i) a polyolefin which was produced by means of a metallocene catalysis (m-polyolefin) in a proportion in a range of from 10 to 100 wt.-%, and
ii) a first antioxidant in a proportion in a range of from 0 to less than 800 wt.-ppm, as determined according to the test method in the description,
each range relating to the total weight of the first polyolefin layer (104);
b) a barrier layer (102); and
c) a carrier layer (103).

2. The sheet-like composite (100) according to claim 1, wherein the layer sequence (101) comprises a further polyolefin layer (201),
wherein the further polyolefin layer (201) comprises
a) a polyolefin in a proportion in a range of from 10 to 100 wt.-%, and
b) a second antioxidant in a proportion in a range of from 0 to less than 800 wt.-ppm,
each range relating to the total weight of the further polyolefin layer (201).

3. The sheet-like composite (100) according to any one of the preceding claims, wherein no polymer layer of the sheet-like composite (100) contains an antioxidant in a proportion of 800 wt.-ppm or more in relation to the weight of the polymer layer.

4. The sheet-like composite (100) according to any one of the preceding claims, wherein at least one of the following applies:
a. the first polyolefin layer (104) is superimposed on the barrier layer (102) on a side facing away from the carrier layer (103);
b. the further polyolefin layer (201) is superimposed on the carrier layer (103) on a side facing away from the barrier layer (102);
c. wherein the m-polyolefin is an m-polyethylene or an m-polypropylene, or both.

5. The sheet-like composite (100) according to any one of the preceding claims, wherein the m-polyolefin is **characterised by** at least a first melting temperature and a second melting temperature.

6. The sheet-like composite (100) according to claim 5, wherein
a) the first melting temperature lies in a range of from 84 to 108°C, and
b) the further melting temperature lies in a range of from 100 to 124°C.

7. The sheet-like composite (100) according to any one of the preceding claims, wherein the layer sequence (101) further comprises a colour layer (301),
wherein the colour layer (301) is superimposed on the carrier layer (103) on a side of the carrier layer (103) facing away from the barrier layer (102),
wherein the colour layer (301) comprises a colourant.

8. The sheet-like composite (100) according to any one of claims 5 to 7, wherein at least one of the following applies:
a. the m-polyethylene in addition to ethylene is based on C3- to C10-α-olefin as monomer;
b. the first antioxidant or the second antioxidant or both is an amine or a phenol derivative or both;
c. the barrier layer (102) comprises one selected from the group consisting of a plastic, a metal, and a metal oxide, or a combination of at least two thereof;
d. the carrier layer (103) comprises one selected from the group consisting of cardboard, paperboard and paper, or a combination of at least two thereof;
e. the carrier layer (103) has at least one hole, wherein the hole is covered at least by the barrier layer (102) and at least by the first polyolefin layer (104) as hole covering layers.

9. A container precursor (400), comprising a sheet-like composite (100) according to any one of claims 1 to 8,
wherein the sheet-like composite (100) comprises at least one fold (401) with at least two adjacent fold surfaces (402), wherein, in each case, at least one part region (403) of the at least two fold surfaces (402) is joined to the other part region (403) by a seal.

10. A closed container (500), enclosing an interior (501), wherein the container (500) comprises the sheet-like composite (100) in a folded state in accordance with any one claims 1 to 8.

11. A process (600) for the production of a sheet-like composite, comprising the following steps (601, 602):
a) Provision of a composite precursor (603), comprising, as layer sequence (101), a barrier layer (102) and a carrier layer (103); and
b) Superimposing a first polyolefin layer (104) on the barrier layer (102),
wherein the first polyolefin layer (104) comprises
i) a polyolefin which was produced by means of a metallocene catalysis (m-polyolefin) in a proportion in a range of from 10 to 100 wt.-%, and
ii) a first antioxidant in a first antioxidant proportion in a range of from 0 to less than 800 wt.-ppm, as determined according to the test method in the description,
each range relating to the total weight of the first polyolefin layer (104).

12. The process (600) according to claim 11, wherein, in a further step, a further polyolefin layer (201) is superimposed on the carrier layer (103),
wherein the further polyolefin layer (201) comprises
a) a polyolefin in a proportion in a range of from 10 to 100 wt.-%, and
b) a second antioxidant in a proportion in a range of from 0 to less than 800 wt.-ppm, as determined according to the test method in the description,
each range relating to the total weight of the further polyolefin layer (201).

13. The process (600) according to any one of claims 11 and 12, wherein the m-polyolefin is **characterised by** at least a first melting temperature and a further melting temperature.

14. The process (600) according to any one of claims 11 to 13, wherein, in a further step (701), the colour layer (301) is superimposed on the carrier layer (103) on a side facing away from the barrier layer (102), wherein the colour layer (301) comprises a colourant.

15. A process (800) for the production of a container precursor, comprising the following steps (801 to 803):
a) Provision of a sheet-like composite (100) according to any one of claims 1 to 8, or of a sheet-like composite (100) according to a process of any one of claims 11 to 14;
b) Folding of the sheet-like composite (100) to form a fold with at least two adjacent fold surfaces; and
c) Joining in each case of at least one part region of the at least two fold surfaces with the relevant other part region by sealing.

16. The process (800) according to claim 15, wherein, during the folding, at least one part of the sheet-like composite (100) has a temperature in a range of from 10 to 50°C.

17. The process (800) according to claim 15 or 16, wherein sealing takes place through one selected from the group consisting of irradiation, contact with a hot solid material, stimulation of a mechanical vibration, and contact with a hot gas, or through a combination of at least two thereof.

18. The process (800) according to any one of claims 15 to 17, wherein, in step in c) (803), the container precursor is obtained, wherein, in a further step, the container precursor is filled with a foodstuff.

19. A container precursor, obtainable through the process (800) according to any one of claims 15 to 18.

20. A process (900) for the production of a container, comprising the following steps (901, 902):
a) Provision of a container precursor (400) according to claim 20 or of a container precursor (400) comprising a sheet-like composite (100) according to any one of claims 1 to 8; and
b) Closing of the container precursor (400) with a closing tool.

21. The process (900) according to claim 20, wherein the container precursor (400) is filled with a foodstuff before being closed.

22. A container, obtainable through the process (900) according to claim 20 or 21.

23. A use of the sheet-like composite (100) according to any one of claims 1 to 8 for the production of a container.

24. A use of the container (500) according to claim 10 or claim 22 for introducing a foodstuff into the container.

## Patentansprüche

1. Ein flächenhafter Verbund (100), der als Schichtfolge (101) umfasst:
a) eine erste Polyolefinschicht (104), bestehend aus
i) ein Polyolefin, das mittels einer Metallocenkatalyse hergestellt wurde (m-Polyolefin), in einem Anteil im Bereich von 10 bis 100 Gew.-%, und
ii) ein erstes Antioxidationsmittel in einem Anteil in einem Bereich von 0 bis weniger als 800 Gew.-ppm, bestimmt nach dem in der Beschreibung angegebenen Testverfahren,
jeder Bereich bezieht sich auf das Gesamtgewicht der ersten Polyolefinschicht (104);
b) eine Sperrschicht (102); und
c) eine Trägerschicht (103).

2. Der flächenhafte Verbund (100) nach Anspruch 1, wobei die Schichtfolge (101) eine weitere Polyolefinschicht (201) umfasst,
wobei die weitere Polyolefinschicht (201) umfasst
a) ein Polyolefin in einem Anteil im Bereich von 10 bis 100 Gew.-%, und
b) ein zweites Antioxidationsmittel in einem Anteil in einem Bereich von 0 bis weniger als 800 Gew.-ppm,
jeder Bereich bezieht sich auf das Gesamtgewicht der weiteren Polyolefinschicht (201).

3. Der flächenhafte Verbund (100) nach einem der vorhergehenden Ansprüche, wobei keine Polymerschicht des folienartigen Verbunds (100) ein Antioxidans in einem Anteil von 800 Gew.-ppm oder mehr, bezogen auf das Gewicht der Polymerschicht, enthält.

4. Der flächenhafte Verbund (100) nach einem der vorhergehenden Ansprüche, wobei mindestens einer der folgenden Punkte zutrifft:
a. die erste Polyolefinschicht (104) auf einer von der Trägerschicht (103) abgewandten Seite über der Sperrschicht (102) liegt;
b. die weitere Polyolefinschicht (201) auf einer von der Sperrschicht (102) abgewandten Seite auf der Trägerschicht (103) aufliegt;
c. wobei das m-Polyolefin ein m-Polyethylen oder ein m-Polypropylen oder beides ist.

5. Der flächenhafte Verbund (100) nach einem der vorhergehenden Ansprüche, wobei das m-Polyolefin durch mindestens eine erste Schmelztemperatur und eine zweite Schmelztemperatur gekennzeichnet ist.

6. Der flächenhafte Verbund (100) nach Anspruch 5, wobei
a) die erste Schmelztemperatur in einem Bereich von 84 bis 108°C liegt, und
b) die weitere Schmelztemperatur liegt in einem Bereich von 100 bis 124°C.

7. Der flächenhafte Verbund (100) nach einem der vorhergehenden Ansprüche, wobei die Schichtenfolge (101) ferner eine Farbschicht (301) umfasst,
wobei die Farbschicht (301) der Trägerschicht (103) auf einer von der Sperrschicht (102) abgewandten Seite der Trägerschicht (103) überlagert ist,
wobei die Farbschicht (301) einen Farbstoff enthält.

8. Der flächenhafte Verbund (100) nach einem der Ansprüche 5 bis 7, wobei mindestens einer der folgenden Punkte zutrifft:
a. das m-Polyethylen zusätzlich zu Ethylen auf C3- bis C10-α-Olefin als Monomer basiert;
b. das erste Antioxidans oder das zweite Antioxidans oder beide ein Amin oder ein Phenolderivat oder beides sind;
c. die Sperrschicht (102) aus einem Kunststoff, einem Metall und einem Metalloxid oder einer Kombination von mindestens zwei davon besteht;
d. die Trägerschicht (103) aus einem Material besteht, das aus der Gruppe ausgewählt ist, die aus Karton, Pappe und Papier oder einer Kombination von mindestens zwei dieser Materialien besteht;
e. die Trägerschicht (103) mindestens ein Loch aufweist, wobei das Loch mindestens durch die Sperrschicht (102) und mindestens durch die erste Polyolefinschicht (104) als Lochdeckschichten abgedeckt ist.

9. Ein Behältervorläufer (400), umfassend einen blattartigen Verbund (100) nach einem der Ansprüche 1 bis 8,
wobei der flächige Verbund (100) mindestens eine Falte (401) mit mindestens zwei benachbarten Falzflächen (402) aufweist, wobei jeweils mindestens ein Teilbereich (403) der mindestens zwei Falzflächen (402) mit dem anderen Teilbereich (403) durch eine Dichtung verbunden ist.

10. Ein geschlossener Behälter (500), der einen Innenraum (501) umschließt, wobei der Behälter (500) den blattartigen Verbund (100) in einem gefalteten Zustand nach einem der Ansprüche 1 bis 8 umfasst.

11. Ein Verfahren (600) zur Herstellung eines blattförmigen Verbunds, umfassend die folgenden Schritte (601, 602):
a) Bereitstellung eines Verbundvorläufers (603), der als Schichtfolge (101) eine Sperrschicht (102) und eine Trägerschicht (103) umfasst; und
b) Auflegen einer ersten Polyolefinschicht (104) auf die Sperrschicht (102), wobei die erste Polyolefinschicht (104) Folgendes umfasst
i) ein Polyolefin, das mittels einer Metallocenkatalyse hergestellt wurde (m-Polyolefin), in einem Anteil im Bereich von 10 bis 100 Gew.-%, und
ii) ein erstes Antioxidationsmittel in einem ersten Antioxidationsmittelanteil in einem Bereich von 0 bis weniger als 800 Gew.-ppm, wie gemäß dem Testverfahren in der Beschreibung bestimmt,
jeder Bereich bezieht sich auf das Gesamtgewicht der ersten Polyolefinschicht (104).

12. Das Verfahren (600) nach Anspruch 11, wobei in einem weiteren Schritt eine weitere Polyolefinschicht (201) auf die Trägerschicht (103) aufgebracht wird,
wobei die weitere Polyolefinschicht (201) umfasst
a) ein Polyolefin in einem Anteil im Bereich von 10 bis 100 Gew.-%, und
b) ein zweites Antioxidationsmittel in einem Anteil im Bereich von 0 bis weniger als 800 Gew.-ppm, bestimmt nach dem in der Beschreibung angegebenen Testverfahren,
jeder Bereich bezieht sich auf das Gesamtgewicht der weiteren Polyolefinschicht (201).

13. Das Verfahren (600) nach einem der Ansprüche 11 und 12, wobei das m-Polyolefin durch mindestens eine erste Schmelztemperatur und eine weitere Schmelztemperatur gekennzeichnet ist.

14. Das Verfahren (600) nach einem der Ansprüche 11 bis 13, wobei in einem weiteren Schritt (701) die Farbschicht (301) auf einer der Barriereschicht (102) abgewandten Seite auf die Trägerschicht (103) aufgebracht wird, wobei die Farbschicht (301) ein Farbmittel umfasst.

15. Das Verfahren (800) zur Herstellung eines Behältervorläufers, umfassend die folgenden Schritte (801 bis 803):
a) Bereitstellung eines flächigen Verbundes (100) nach einem der Ansprüche 1 bis 8 oder eines flächigen Verbundes (100) nach einem Verfahren nach einem der Ansprüche 11 bis 14;
b) Falten des blattförmigen Verbunds (100) zur Bildung einer Falte mit mindestens zwei benachbarten Falzflächen; und
c) Verbinden jeweils mindestens eines Teilbereichs der mindestens zwei Falzflächen mit dem jeweils anderen Teilbereich durch Versiegeln.

16. Das Verfahren (800) nach Anspruch 15, wobei während des Faltens mindestens ein Teil des flächigen Verbundes (100) eine Temperatur in einem Bereich von 10 bis 50°C aufweist.

17. Das Verfahren (800) nach Anspruch 15 oder 16, wobei die Versiegelung durch eine der folgenden Maßnahmen erfolgt: Bestrahlung, Kontakt mit einem heißen festen Material, Anregung einer mechanischen Schwingung und Kontakt mit einem heißen Gas oder durch eine Kombination von mindestens zwei dieser Maßnahmen .

18. Das Verfahren (800) nach einem der Ansprüche 15 bis 17, wobei in Schritt in c) (803) der Behältervorläufer erhalten wird, wobei in einem weiteren Schritt der Behältervorläufer mit einem Lebensmittel gefüllt wird.

19. Ein Behältervorläufer, erhältlich durch das Verfahren (800) nach einem der Ansprüche 15 bis 18.

20. Ein Verfahren (900) zur Herstellung eines Behälters, umfassend die folgenden Schritte (901, 902):
a) Bereitstellung eines Behältervorläufers (400) nach Anspruch 20 oder eines Behältervorläufers (400) mit einem flächigen Verbund (100) nach einem der Ansprüche 1 bis 8; und
b) Verschließen des Behältervorläufers (400) mit einem Verschlusswerkzeug.

21. Das Verfahren (900) nach Anspruch 20, wobei der Behältervorläufer (400) vor dem Verschließen mit einem Lebensmittel gefüllt wird.

22. Ein Behälter, erhältlich durch das Verfahren (900) nach Anspruch 20 oder 21.

23. Eine Verwendung des flächigen Verbundes (100) nach einem der Ansprüche 1 bis 8 zur Herstellung eines Behälters.

24. Eine Verwendung des Behälters (500) nach Anspruch 10 oder Anspruch 22 zum Einbringen eines Lebensmittels in den Behälter.

## Revendications

1. Un composite en forme de feuille (100), comprenant, en tant que séquence de couches (101) :
a) une première couche de polyoléfine (104), comprenant
i) une polyoléfine produite au moyen d'une catalyse métallocène (m-polyoléfine) dans une proportion allant de 10 à 100 % en poids, et
ii) un premier antioxydant dans une proportion comprise entre 0 et moins de 800 ppm en poids, déterminée selon la méthode d'essai décrite,
chaque plage se rapportant au poids total de la première couche de polyoléfine (104) ;
b) une couche barrière (102) ; et
c) une couche de support (103).

2. Le composite en forme de feuille (100) selon la revendication 1, dans lequel la séquence de couches (101) comprend une autre couche de polyoléfine (201),
dans laquelle la couche supplémentaire de polyoléfine (201) comprend
a) une polyoléfine dans une proportion comprise entre 10 et 100 % en poids, et
b) un second antioxydant dans une proportion comprise entre 0 et moins de 800 ppm en poids,
chaque plage se rapportant au poids total de la couche supplémentaire de polyoléfine (201).

3. Le composite en feuille (100) selon l'une des revendications précédentes, dans lequel aucune couche de polymère du composite en feuille (100) ne contient d'antioxydant dans une proportion de 800 wt.-ppm ou plus par rapport au poids de la couche de polymère.

4. Le Composite en forme de feuille (100) selon l'une quelconque des revendications précédentes, dans lequel au moins l'un des éléments suivants s'applique :
a. la première couche de polyoléfine (104) est superposée à la couche barrière (102) sur une face opposée à la couche support (103) ;
b. l'autre couche de polyoléfine (201) est superposée à la couche support (103) sur une face opposée à la couche barrière (102) ;
c. où la m-polyoléfine est un m-polyéthylène ou un m-polypropylène, ou les deux.

5. Le composite en forme de feuille (100) selon l'une quelconque des revendications précédentes, dans lequel la m-polyoléfine est **caractérisée par** au moins une première température de fusion et une seconde température de fusion.

6. Le composite en forme de feuille (100) selon la revendication 5, dans lequel
a) la première température de fusion est comprise entre 84 et 108°C, et
b) la température de fusion supplémentaire est comprise entre 100 et 124°C.

7. Le composite en forme de feuille (100) selon l'une quelconque des revendications précédentes, dans lequel la séquence de couches (101) comprend en outre une couche de couleur (301),
la couche de couleur (301) est superposée à la couche de support (103) sur une face de la couche de support (103) opposée à la couche barrière (102),
dans laquelle la couche colorée (301) comprend un colorant.

8. Le composite en forme de feuille (100) selon l'une des revendications 5 à 7, dans lequel au moins l'un des éléments suivants s'applique :
a. le m-polyéthylène, en plus de l'éthylène, est basé sur l'oléfine C3- à C10-α comme monomère ;
b. le premier antioxydant ou le second antioxydant ou les deux sont une amine ou un dérivé de phénol ou les deux ;
c. la couche barrière (102) comprend un élément choisi dans le groupe constitué d'un plastique, d'un métal et d'un oxyde métallique ou d'une combinaison d'au moins deux de ces éléments ;
d. la couche de support (103) comprend un matériau choisi dans le groupe constitué par le carton, le carton et le papier, ou une combinaison d'au moins deux de ces matériaux ;
e. la couche support (103) comporte au moins un trou, le trou étant recouvert au moins par la couche barrière (102) et au moins par la première couche de polyoléfine (104) en tant que couches recouvrant le trou.

9. Un précurseur de récipient (400), comprenant un composite en forme de feuille (100) selon l'une quelconque des revendications 1 à 8,
dans lequel le composite en forme de feuille (100) comprend au moins un pli (401) avec au moins deux surfaces de pliage adjacentes (402), dans lequel, dans chaque cas, au moins une zone partielle (403) des au moins deux surfaces de pliage (402) est reliée à l'autre zone partielle (403) par un joint.

10. Un récipient fermé (500), renfermant un intérieur (501), dans lequel le récipient (500) comprend le composite en forme de feuille (100) dans un état plié conformément à l'une des revendications 1 à 8.

11. Un procédé (600) pour la production d'un composite en forme de feuille, comprenant les étapes suivantes (601, 602) :
a) Fourniture d'un précurseur composite (603), comprenant, en tant que séquence de couches (101), une couche barrière (102) et une couche support (103) ; et
b) Superposition d'une première couche de polyoléfine (104) sur la couche barrière (102),
dans laquelle la première couche de polyoléfine (104) comprend
i) une polyoléfine produite au moyen d'une catalyse métallocène (m-polyoléfine) dans une proportion allant de 10 à 100 % en poids, et
ii) un premier antioxydant dans une proportion de premier antioxydant comprise entre 0 et moins de 800 ppm en poids, telle que déterminée selon la méthode d'essai décrite dans la description,
chaque plage se rapportant au poids total de la première couche de polyoléfine (104).

12. Le procédé (600) selon la revendication 11, dans lequel, dans une étape ultérieure, une autre couche de polyoléfine (201) est superposée à la couche support (103),
dans laquelle la couche supplémentaire de polyoléfine (201) comprend
a) une polyoléfine dans une proportion comprise entre 10 et 100 % en poids, et
b) un second antioxydant dans une proportion comprise entre 0 et moins de 800 ppm en poids, déterminée selon la méthode d'essai décrite dans la description,
chaque plage se rapportant au poids total de la couche supplémentaire de polyoléfine (201).

13. Le procédé (600) selon l'une quelconque des revendications 11 et 12, dans lequel la m-polyoléfine est **caractérisée par** au moins une première température de fusion et une autre température de fusion.

14. Le procédé (600) selon l'une quelconque des revendications 11 à 13, dans lequel, dans une étape supplémentaire (701), la couche de couleur (301) est superposée à la couche support (103) sur une face opposée à la couche barrière (102), la couche de couleur (301) comprenant un colorant.

15. Le procédé (800) pour la production d'un précurseur de récipient, comprenant les étapes suivantes (801 à 803) :
a) Mise à disposition d'un composite en feuille (100) selon l'une quelconque des revendications 1 à 8, ou d'un composite en feuille (100) selon un procédé de l'une quelconque des revendications 11 à 14 ;
b) Pliage du composite en forme de feuille (100) pour former un pli avec au moins deux surfaces de pliage adjacentes ; et
c) Assemblage, dans chaque cas, d'au moins une partie des au moins deux surfaces de pliage avec l'autre partie correspondante par scellement.

16. Le procédé (800) selon la revendication 15, dans lequel, pendant le pliage, au moins une partie de la feuille composite (100) a une température comprise entre 10 et 50°C.

17. Le procédé (800) selon la revendication 15 ou 16, dans lequel le scellement s'effectue par l'un des procédés choisis dans le groupe constitué par l'irradiation, le contact avec un matériau solide chaud, la stimulation d'une vibration mécanique et le contact avec un gaz chaud, ou par une combinaison d'au moins deux de ces procédés .

18. Le procédé (800) selon l'une des revendications 15 à 17, dans lequel, à l'étape c) (803), le précurseur de récipient est obtenu, dans lequel, dans une étape ultérieure, le précurseur de récipient est rempli d'une denrée alimentaire.

19. Un précurseur de récipient, pouvant être obtenu par le procédé (800) selon l'une quelconque des revendications 15 à 18.

20. Un procédé (900) pour la production d'un récipient, comprenant les étapes suivantes (901, 902) :
a) Fourniture d'un précurseur de récipient (400) selon la revendication 20 ou d'un précurseur de récipient (400) comprenant un composite en forme de feuille (100) selon l'une quelconque des revendications 1 à 8 ; et
b) Fermeture du précurseur de récipient (400) à l'aide d'un outil de fermeture.

21. Le procédé (900) selon la revendication 20, dans lequel le précurseur de récipient (400) est rempli d'une denrée alimentaire avant d'être fermé.

22. Le récipient pouvant être obtenu par le procédé (900) selon la revendication 20 ou 21.

23. Une utilisation du composite en feuille (100) selon l'une quelconque des revendications 1 à 8 pour la production d'un récipient.

24. Une utilisation du récipient (500) selon la revendication 10 ou la revendication 22 pour introduire une denrée alimentaire dans le récipient.
